# FASCICULE DE BREVET EUROPEEN

(11) **EP 1 025 683 B1**
(45) Date de publication et mention de la délivrance du brevet: **09.07.2008**
(21) Numéro de dépôt: 98949049.5
(22) Date de dépôt: 13.10.1998
(51) Int. Cl.: H04M 1/56, H04M 1/72

(54) **TELEPHONE MOBILE A DIFFUSION DE MESSAGES SONORES**
MOBILTELEFON MIT SPRACHAUSGABEVORRICHTUNG
MOBILE TELEPHONE SENDING AUDIO MESSAGES

(30) Priorité: 14.10.1997 FR 9712804
(43) Date de publication de la demande: 09.08.2000
(73) Titulaire: SAGEM Communication, 75015 Paris (FR)
(72) Inventeur: THIERRY, Jean-Paul, F-95520 Osny (FR); PORATO, Marc, F-60240 Chaumont en Vexin (FR); HEURTAUX, Frédéric, F-13610 Le Puy Sainte Réparade (FR)
(74) Mandataire: Bloch, Gérard
(86) Numéro de dépôt international: PCT/FR1998/002192
(87) Numéro de publication internationale: WO 1999/020029

(56) Documents cités:
- EP-A- 0 584 666
- WO-A-96/19069
- GB-A- 2 268 663
- RUEHL H W ET AL: "SPS51 - A UNIVERSAL INTERFACE FOR HANDS-FREE TELEPHONY, SPEECH RECOGNITION AND SPEECH STORAGE IN THE CAR TELEPHONE" PHILIPS TELECOMMUNICATION REVIEW, vol. 48, no. 4, 1 décembre 1990, pages 1-9, XP000178585

## Description

L'invention concerne un téléphone mobile à options multiples, d'un réseau cellulaire ou de proximité.

Les options du téléphone mobile (mémorisation de numéros d'appels, rappel automatique de numéros, configuration du téléphone etc.) sont généralement accessibles par une arborescence de commandes représentées visuellement par des menus destinés à s'afficher sur un écran du téléphone, dans laquelle un utilisateur peut se déplacer ou « naviguer » à l'aide d'un clavier de saisie.

Les options des téléphones mobiles étant de plus en plus nombreuses et la navigation dans les menus nécessitant et l'entrée manuelle de commandes au clavier de saisie et la lecture des menus à l'écran d'affichage, l'utilisation des téléphones devient de plus en plus complexe. Il est notamment de plus en plus difficile, pour un conducteur de véhicule automobile ou encore, à titre d'exemple, pour un non voyant, d'utiliser son téléphone mobile en aveugle.

Les documents EP-A-0584666 et WO 9619069 enseignent un téléphone mobile qui comprend des moyens mémoires contenant une pluralité de messages vocaux indiquant la fonction activée par l'utilisateur par appui sur une touche de clavier ou le numéro de téléphone composé par l'utilisateur. Ces messages sont diffusés par les moyens d'émission sonore, produits par les moyens de synthèse vocale et enregistrée par des moyens à encoder et des moyens mémoires.

Le document RUEHL H W ET AL : 'SPS51 - A UNIVERSAL INTERFACE FOR HANDS-FREE TELEPHONY, SPEECH RECOGNITION AND SPEECH STORAGE IN THE CAR TELEPHONE' PHILIPS TELECOMMUNICATION REVIEW, vol. 48, no. 4 décrit un équipement supplémentaire pour un téléphone mobile, qui est monté dans le coffre d'une voiture. Cet équipement comprend une pluralité d'options accessibles par navigation, des moyens pour naviguer dans l'arborescence de commandes et des moyens mémoires contenant une pluralité de messages. Ces messages vocaux sont diffusés par des moyens d'émission sonore lors de la navigation dans l'arborescence de commandes.

Le problème que se propose de résoudre la présente invention est de trouver une solution alternative pour utiliser un téléphone mobile en aveugle qui permet de naviguer ou de se déplacer dans une arborescence de commandes, afin de trouver la commande que l'on souhaite activer.

A cet effet, l'invention concerne un téléphone mobile selon la revendication 1.

Grâce à l'invention, l'utilisateur peut naviguer « à l'oreille » dans l'arborescence de commandes.

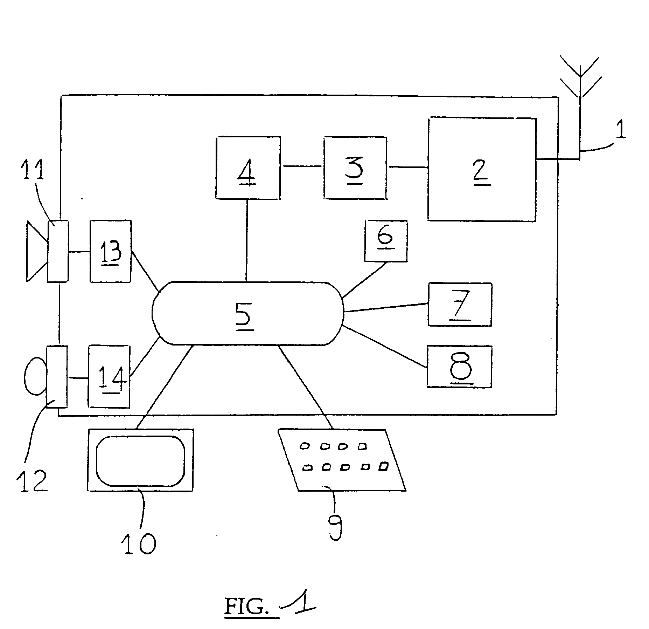

L'invention sera mieux comprise à l'aide de la description suivante d'une forme de réalisation particulière du téléphone mobile de l'invention, en référence à la figure unique annexée qui représente un schéma bloc fonctionnel de la forme de réalisation particulière du téléphone mobile de l'invention. Le téléphone mobile relié à un réseau cellulaire comporte une pluralité d'options téléphoniques classiques telles que le rappel automatique d'appel, la transmission d'appel, l'augmentation et la diminution du volume etc.

Ces options téléphoniques sont accessibles par déplacement ou "navigation" dans une arborescence de commandes ici représentée visuellement par des menus destinés à s'afficher sur un écran 10. Dans l'exemple particulier de la description, les options sont classées dans des menus secondaires eux-mêmes répertoriés dans des menus principaux.

Le téléphone mobile comprend, de façon classique, un bloc 2 d'émission et de réception radio pourvu d'une antenne radio 1, un codec 3 destiné à coder les informations émises et à décoder les informations reçues, un bloc 4 de correction d'erreurs de transmission radio, une interface utilisateur et un bloc de contrôle, en l'espèce un microprocesseur 5.

L'interface utilisateur comporte un clavier de saisie 9, l'écran d'affichage 10, un écouteur pourvu d'un haut-parleur 11 et un microphone 12, tous reliés au microprocesseur de contrôle 5, par l'intermédiaire 'd'un convertisseur numérique-analogique 13 (CNA) pour le haut-parleur 11 et d'un convertisseur analogique-numérique (CAN) 14 pour le microphone 12.

Le clavier de saisie 9 comprend:
- une pluralité de touches téléphoniques classiques, notamment pour la numérotation d'appel,
- une touche d'accès à l'arborescence de commandes,
- un navigateur pour se déplacer dans l'arborescence de commandes,
- une touche de sélection pour sélectionner une commande,
- une touche d'abandon pour sortir de l'arborescence de commandes et
- une touche d'aide vocale pour commander la navigation "à l'oreille" dans l'arborescence de commandes.

Le téléphone comprend également une pluralité de blocs mémoires reliés au microprocesseur de contrôle 5 :
- un bloc mémoire d'utilisateur 6 destiné à contenir un répertoire téléphonique et une mémoire de stockage d'informations d'utilisateur ;
- un bloc mémoire d'exécution 7 contenant des programmes d'exécution pour exécuter les options du téléphone, un programme d'affichage et d'émission sonore et un programme d'enregistrement sonore de messages vocaux et
- un bloc mémoire d'aide à la navigation 8 contenant des messages écrits et des messages vocaux d'aide à la navigation dans l'arborescence de commandes, destinés à indiquer les commandes, et des messages vocaux d'identification d'appelant et de perte de réseau.

Afin d'illustrer le fonctionnement du téléphone mobile, l'exécution vocalement guidée d'une option particulière du téléphone, en l'espèce l'augmentation du volume, va maintenant être décrite.

L'option "augmentation du volume" est accessible par la commande "réglage du volume" elle-même accessible par la commande "configuration du téléphone" .

En appuyant sur la touche d'aide vocale du clavier de saisie 9, on commande l'émission de messages vocaux d'aide à la navigation lors de la navigation dans l'arborescence de commandes.

En appuyant sur la touche d'accès à l'arborescence de commandes du clavier de saisie 9, on accède à une première commande, en l'espèce la commande "messages", à laquelle correspond un menu, le message écrit indiquant "menu des messages" s'affichant sur l'écran 10 et le message vocal correspondant "messages" étant diffusé simultanément par le haut-parleur 11 de l'écouteur.

On notera ici que l'affichage des messages écrits sur l'écran 10 et l'émission sonore des messages vocaux par le haut-parleur 11 sont exécutés par le programme d'affichage et d'émission sonore, sous la commande du microprocesseur de contrôle 5.

Afin d'accéder à la commande "configuration du téléphone" à laquelle correspond également un menu, on se déplace d'une commande à l'autre, à l'aide du navigateur du clavier de saisie 9. A chaque changement de commande, le haut-parleur 11 diffuse le message vocal indiquant la nouvelle commande et l'écran d'affichage 10 affiche le message écrit indiquant le menu correspondant.

Après la diffusion du message vocal "configuration du téléphone", on sélectionne la commande "configuration du téléphone", afin d'y accéder, en appuyant sur la touche de sélection du clavier de saisie 9.

Puis, afin d'accéder à la commande "réglage du volume", on se déplace dans des "sous" commandes de la commande "configuration du téléphone", à l'aide du navigateur du clavier de saisie 9, le haut-parleur 11 diffusant à chaque changement de commande le message vocal indiquant la nouvelle commande et l'écran d'affichage 10 affichant simultanément le message écrit indiquant le menu correspondant.

Pendant ou après la diffusion du message vocal "réglage du volume", on sélectionne cette commande, afin d'y accéder, en appuyant sur la touche de sélection du clavier de saisie 9.

A l'aide du navigateur, on navigue dans les options du "réglage du volume" jusqu'à l'option "augmentation du volume", le haut-parleur 11 diffusant les messages vocaux indiquant les options et l'écran 10 affichant les messages écrits correspondants, à chaque changement d'option.

A la diffusion du message vocal "augmentation du volume", on augmente le volume du téléphone en appuyant sur la touche de sélection du clavier de saisie 9 jusqu'à obtenir le niveau sonore souhaité.

En cas d'appel d'un appelant dont le numéro d'appel est contenu dans le répertoire téléphonique du bloc d'utilisateur 6, le haut-parleur 11 diffuse un message vocal d'identification indiquant le nom de l'appelant.

En cas de perte de liaison du téléphone avec le réseau cellulaire, un message vocal d'annonce de la perte du réseau est diffusé par le haut-parleur 11.

Il pourrait être prévu d'autres messages vocaux d'annonce d'un événement donné et destinés à être diffusés lorsque cet événement se produit.

Les messages vocaux d'aide à la navigation, d'identification de l'appelant et d'annonce d'un événement, peuvent être modifiés par enregistrement d'un nouveau message. Pour enregistrer ces nouveaux messages vocaux une commande d'enregistrement, accessible par la commande de configuration du téléphone, contient des options permettant d'enregistrer de nouveaux messages vocaux. Les options d'enregistrement d'un nouveau message vocal sont ainsi accessibles par navigation dans l'arborescence de commandes, comme décrit précédemment. A la diffusion par le haut-parleur 11 d'un message vocal indiquant l'option d'enregistrement souhaitée, on enregistre un nouveau message vocal à l'aide du microphone 12, en appuyant sur la touche de sélection du clavier de saisie 9. En appuyant à nouveau sur la touche de sélection, on arrête l'enregistrement.

Le téléphone pourrait également comprendre un bloc de synthèse vocale pour synthétiser des messages vocaux à partir de messages écrits. Dans ce cas, l'enregistrement de nouveaux messages pourrait être réalisé par saisie de messages écrits à l'aide du clavier de saisie 9 puis par synthèse vocale des messages écrits saisis.

Il pourrait également être prévu une prise de liaison à une machine de bureau externe destinée à transmettre de nouveaux messages.

A la place des messages vocaux, il pourrait être prévu des messages seulement sonores.

Au lieu d'être stockés dans un bloc mémoire interne, les messages sonores pourraient être stockés dans une mémoire amovible externe, une carte SIM par exemple.

Dans une variante de réalisation du téléphone de l'invention, les messages sonores indiquant en fait un état donné du téléphone sont répétés, jusqu'à ce que le téléphone soit revenu à un état muet, dans lequel aucun message sonore n'est diffusé.

Enfin; le téléphone pourrait ne pas comprendre d'écran d'affichage, la navigation dans l'arborescence de commandes s'effectuant alors exclusivement "à l'oreille".

## Revendications

1. Téléphone mobile comprenant une pluralité d'options accessibles par navigation dans une arborescence de commandes, des moyens pour naviguer dans l'arborescence de commandes, des moyens mémoire (8) contenant une pluralité de messages vocaux d'aide à la navigation dans l'arborescence de commandes et des moyens d'émission sonore (11), les messages vocaux d'aide à la navigation dans l'arborescence de commandes étant destinés à être diffusés par les moyens d'émission sonore (11) lors de la navigation dans l'arborescence de commandes, téléphone **caractérisé par le fait qu'**il comprend des moyens de synthèse vocale pour synthétiser les messages vocaux à partir de messages écrits et des moyens (12, 14, 7, 5) pour enregistrer une pluralité de messages d'aide à la navigation dans les moyens mémoire, comportant des moyens de saisie de messages écrits destinés à être synthétisés par les moyens de synthèse vocale.

2. Téléphone mobile selon la revendication 1, dans lequel les messages d'aide à la navigation dans l'arborescence de commandes sont des messages vocaux destinés à indiquer les commandes.

3. Téléphone portable selon l'une des revendications 1 et 2, dans lequel les moyens d'enregistrement de message comprennent un microphone (12), destiné à enregistrer des messages vocaux d'aide à la navigation.

4. Téléphone portable selon l'une des revendications 1 à 3, dans lequel les moyens d'enregistrement de message comprennent des moyens de liaison à une machine de bureau externe.

5. Téléphone portable selon l'une des revendications 1 à 4, dans lequel les moyens mémoire (8) contiennent une pluralité de messages sonores d'identification d'appelant et les moyens d'émission sonore sont destinés à émettre le message d'identification d'un appelant en cas d'appel dudit appelant.

6. Téléphone portable selon l'une des revendications 1 à 5, dans lequel les moyens mémoire (8) contiennent des messages sonores d'annonce d'un événement et les moyens d'émission sonore sont destinés à diffuser le message d'annonce d'un événement lorsque ledit événement se produit.

7. Téléphone portable selon l'une des revendications 1 à 6, dans lequel il est prévu un écran d'affichage (10) et des menus représentant visuellement l'arborescence de commandes, lesdits menus étant destinés à s'afficher à l'écran (10) simultanément à la diffusion sonore des messages d'aide à la navigation.

8. Téléphone portable selon les revendications 1 à 7, dans lequel il est prévu une mémoire externe de stockage de messages sonores.

9. Téléphone portable selon l'une des revendications 1 à 8, dans lequel la diffusion d'un message sonore indiquant un état du téléphone est répétée, jusqu'à ce que le téléphone se trouve dans un état muet.

## Claims

1. Mobile telephone which includes a number of options which can be accessed by browsing through a command tree, means for browsing through the command tree, memory means (8) containing a number of voice messages for assisting browsing through the command tree and means of audible transmission (11), where the voice messages for assisting browsing through the command tree are intended to be issued by the means of audible transmission (11) during browsing through the command tree, where the telephone is **characterised by** the fact that it includes means of voice synthesis for synthesising the voice messages from written messages, and means (12,14,7,5) for recording a number of messages for assisting browsing in the memory means, including means for entering written messages intended to be synthesised by the means of voice synthesis.

2. Mobile telephone according to claim 1, in which the messages for assisting browsing through the command tree are voice messages intended to indicate the commands.

3. Portable telephone according to one of claims 1 and 2, in which the means for recording messages include a microphone (12), intended to record voice messages for assisting browsing.

4. Portable telephone according to one of claims 1 to 3, in which the means for recording messages include means for linking to an external office machine.

5. Portable telephone according to one of claims 1 to 4, in which the memory means (8) contain a number of audible messages identifying the caller and the means of audible transmission are intended to transmit the caller identification message in the event of a call from the said caller.

6. Portable telephone according to one of claims 1 to 5, in which the memory means (8) contain audible messages for announcing an event and the means of audible transmission are intended to transmit the message for announcing an event when the said event occurs.

7. Portable telephone according to one of claims 1 to 6, in which a display screen (10) and menus which visually represent the command tree are provided, with the said menus being intended to be displayed on the screen (10) simultaneously with the audible transmission of the messages for assisting browsing.

8. Portable telephone according to claims 1 to 7, in which an external memory for storing the audible messages is provided.

9. Portable telephone according to one of claims 1 to 8, in which the transmission of an audible message which indicates a status of the telephone is repeated until the telephone is in a mute state.

## Patentansprüche

1. Mobiltelefon mit einer Mehrzahl von durch eine Navigation in einer Befehlsbaumstruktur zugänglichen Optionen, mit Mitteln zum Navigieren in der Befehlsbaumstruktur, mit eine Mehrzahl von Sprachnachrichten zur Unterstützung der Navigation in der Befehlsbaumstruktur enthaltenden Speichermitteln (8) und mit Mitteln (11) zur Schallemission, wobei bei der Navigation in der Befehlsbaumstruktur die Sprachnachrichten zur Unterstützung der Navigation in der Befehlsbaumstruktur zur Verbreitung durch die Mittel (11) zur Schallemission vorgesehen sind, wobei das Telefon **dadurch gekennzeichnet ist, dass** es Mittel zur Sprachsynthese zum Herstellen der Sprachnachrichten durch Synthese ausgehend von geschriebenen Nachrichten und Mittel (12, 14, 7, 5) zum Aufzeichnen einer Mehrzahl von Nachrichten zur Unterstützung der Navigation in den Speichermitteln aufweist und Mittel zum Eingeben von zur Synthese durch die Sprachsynthesemittel vorgesehenen geschriebenen Nachrichten aufweist.

2. Mobiltelefon nach Anspruch 1, wobei die Nachrichten zur Unterstützung der Navigation in der Befehlsbaumstruktur zur Angabe der Befehle vorgesehene Sprachnachrichten sind.

3. Tragbares Telefon nach einem der Ansprüche 1 oder 2, wobei die Mittel zur Nachrichtenaufzeichnung ein Mikrofon (12) aufweisen, das zum Aufzeichnen von Sprachnachrichten zur Unterstützung der Navigation vorgesehen ist.

4. Tragbares Telefon nach einem der Ansprüche 1 bis 3, wobei die Mittel zur Nachrichtenaufzeichnung Mittel zur Verbindung mit einer externen Büromaschine aufweisen.

5. Tragbares Telefon nach einem der Ansprüche 1 bis 4, wobei die Speichermittel (8) eine Mehrzahl von akustischen Nachrichten zur Anruferidentifikation enthalten und die Mittel zur Schallemission zum Senden der Identifikationsnachricht eines Anrufers im Falle des Anrufs des besagten Anrufers vorgesehen sind.

6. Tragbares Telefon nach einem der Ansprüche 1 bis 5, wobei die Speichermittel (8) akustische Nachrichten zur Ankündigung eines Ereignisses enthalten und die Mittel zur Schallemission zur Verbreitung der Ereignisankündigungsnachricht vorgesehen sind, wenn sich das Ereignis ereignet.

7. Tragbares Telefon nach einem der Ansprüche 1 bis 6, wobei ein Anzeige-Display (10) und die Befehlsbaumstruktur visuell darstellende Menüs vorgesehen sind, wobei die Menüs derart ausgebildet sind, dass sie bei der akustischen Verbreitung der Nachrichten zur Unterstützung der Navigation gleichzeitig auf dem Display (10) angezeigt werden.

8. Tragbares Telefon nach einem der Ansprüche 1 bis 7, wobei ein externer Speicher zur Speicherung der akustischen Nachrichten vorgesehen ist.

9. Tragbares Telefon nach einem der Ansprüche 1 bis 8, wobei die Verbreitung einer einen Zustand des Telefons anzeigenden akustischen Nachricht wiederholt wird, bis sich das Telefon in einem stummen Zustand befindet.
